# EUROPÄISCHE PATENTANMELDUNG

(11) **EP 1 983 010 A2**
(43) Veröffentlichungstag der Anmeldung: **22.10.2008**
(21) Anmeldenummer: 08154592.3
(22) Anmeldetag: 16.04.2008
(51) Int. Cl.: C08G 18/40, C08G 18/48, C08G 18/69

(54) **Verfahren zur Herstellung von Polyurethanen**

(30) Priorität: 19.04.2007 EP 07106471
(71) Anmelder: BASF SE, 67056 Ludwigshafen (DE)
(72) Erfinder: Reese, Hans-Jürgen, 49401 Damme (DE); Ruppel, Raimund, 68165 Mannheim (DE); Reese, Oliver, 49448 Lemförde (DE); Krawczyk, Sylvia, 49356 Diepholz (DE)

(57) **Zusammenfassung**

Gegenstand der Erfindung ist ein Verfahren zur Herstellung von Polyurethanen durch Umsetzung von
a) Polyisocyanaten mit
b) Verbindungen mit mindestens zwei mit Isocyanatgruppen reaktiven Wasserstoffatomen,

dadurch gekennzeichnet, dass die Verbindungen mit mindestens zwei mit Isocyanatgruppen reaktiven Wasserstoffatomen b) Mischungen aus
bi) einem Polyol mit einer Hydroxylzahl im Bereich zwischen 20 und 180 mgKOH/g, hergestellt durch Umsetzung von eines Polybutadienpolyols mit Alkylenoxid unter Verwendung eines DMC-Katalysators, und
bii) einem Polyetheralkohol mit einer Funktionalität von 2 bis 3 und einer Hydroxylzahl im Bereich zwischen 20 und 450 mgKOH/g, der von bi) verschieden ist, enthalten, und/oder als Polyisocyanate a) ein Isocyanatgruppen und Urethangruppen enthaltendes Umsetzungsprodukt eines mindestens zweifunktionellen Isocyanats mit dem Polyol bi) eingesetzt wird.

## Beschreibung

Gegenstand der Erfindung ist ein Verfahren zur Herstellung von Polyurethanen durch Umsetzung von Polyisocyanaten mit Verbindungen mit mindestens zwei mit Isocyanatgruppen reaktiven Wasserstoffatomen.

Polyurethane sind seit langem bekannt und vielfach in der Literatur beschrieben. Ihre Herstellung erfolgt üblicherweise durch Umsetzung von Polyisocyanaten mit Verbindungen mit mindestens zwei mit Isocyanatgruppen reaktiven Wasserstoffatomen. Polyurethane werden auf vielen technischen Gebieten eingesetzt. So gibt es beispielsweise geschäumte und kompakte Polyurethane.

Je nach dem beabsichtigten Einsatzgebiet der Polyurethane werden deren Eigenschaften angepasst. So gibt es Einsatzgebiete, in denen eine hydrophobe Ausrüstung der Polyurethane erwünscht ist. Diese kann beispielsweise durch die Mitverwendung von hydrophoben Zusatzstoffen bewirkt werden. Derartige Verbindungen können jedoch die Polyurethanreaktion stören. Weiterhin kann es zu einer Migration der Verbindungen aus dem Polyurethan kommen.

Weiterhin ist bekannt, als Verbindungen mit mindestens zwei mit Isocyanatgruppen reaktiven Wasserstoffatomen OH-terminierte Polybutadiene, im folgenden auch als Polybutadienpolyol bezeichnet, einzusetzen. Diese können mit den Polyisocyanaten reagieren und werden so in die Polyurethan-Matrix eingebaut.

Aufgrund ihres unpolaren Charakters sind OH-terminierte Polybutadiene in Polyurethansystemen jedoch nur begrenzt einsetzbar. Zum einen sind diese OH-terminierten Polybutadiene in polyolischen Gemischen nur mit sehr niedermolekularen Polyolen und dabei auch mit diesen nur begrenzt mischbar, zum anderen ist der Weg eigenschaftsbestimmende Mengen an OH-terminiertem Polybutadien über das Isocyanatprepolymere in das Polyurethan-System einzubauen, durch Viskositätsprobleme bei höheren Einsatzmengen begrenzt.

Es ist auch bekannt, OH-terminiertes Polybutadien durch Alkoxylierung mit Polyetherendketten zu versehen. Die übliche alkalische Katalyse zur Anlagerung der Alkylenoxide an das OH-terminierte Polybutadien ist jedoch auf Grund der schlechten Mischbarkeit des Polybutadiens mit den in wässriger Lösung vorliegenden alkalischen Katalysatoren schwierig bzw. kaum möglich.

JP 3281519 beschreibt die Herstellung von Umsetzungsprodukten von OH-terminierem Polybutadien mit Alkylenoxiden unter Verwendung von Doppelmetallcyanidkatalysatoren, auch als DMC-Katalysatoren bezeichnet. Damit können alkoxylierte Polybutadienpolyole mit guten Eigenschaften hergestellt werden. In diesem Dokument wird auch die Herstellung von Polyurethan-Elastomeren unter Verwendung der alkoxylierten Polybutadienpolyole als Polyolkomponente beschrieben, wobei die alkoxylierten Polybutadienpolyole in Kombination mit anderen Polyolen eingesetzt werden. Hierbei wird zum einen nur die Mitverwendung kurzkettiger Diole zur Herstellung der beschriebenen Elastomere offenbart, sowie zum anderen die Mitverwendung anderer Polyole erwähnt. Nachteile ergeben sich daraus, dass die vorgeschlagene Lösung für andere Polyurethanprodukte sowohl in kompakter Form aber insbesondere in geschäumter Form nicht verwendbar ist.

Es war die Aufgabe der vorliegenden Erfindung, Polyurethane mit hydrophoben Eigenschaften und Gummicharakter bereitzustellen, die unproblematisch herstellbar sind. Die Polyurethane sollten weiterhin durch den Einbau von Polybutadien ein gummiartiges Verhalten aufweisen. Dabei sollte das alkoxylierte Polybutadienpolyol so in Zweikomponenten-PUR-Systemen eingesetzt werden, dass es mit Polyetherpolyolen gut mischbar ist und zu kompakten oder geschäumten Polyurethanen mit Gummicharakter verarbeitet werden kann.

Die Aufgabe konnte überraschenderweise gelöst werden, indem als Verbindungen mit mindestens zwei mit Isocyanatgruppen reaktiven Wasserstoffatomen ein Gemisch aus einem Polyol mit einer Hydroxylzahl im Bereich zwischen 20 und 180 mgKOH/g, hergestellt durch Umsetzung eines Polybutadienpolyols mit Alkylenoxid unter Verwendung eines DMC-Katalysators, und einem Polyetherdiol und/oder -triol mit einer Hydroxylzahl im Bereich zwischen 20 und 400 mgKOH/g, hergestellt durch Anlagerung von Alkylenoxiden an eine von einem Polybutadienpolyol verschiedene Startsubstanz eingesetzt und als Isocyanatkomponente ein Polyisocyanat und/oder ein Isocyanatgruppen und Urethangruppen enthaltendes Prepolymer auf Basis eines Polyols mit einer Hydroxylzahl im Bereich zwischen 20 und 180 mgKOH/g, hergestellt durch Umsetzung von eines Polybutadienpolyols mit Alkylenoxid unter Verwendung eines DMC-Katalysators eingesetzt wird, wobei der Umsatz zum Isocyanatgruppen und Urethangruppen enthaltenden Prepolymer gegebenenfalls auch unter Verwendung eines weiteren Diols mit einer OH-Zahl von 25 bis 1800 mgKOH/g erfolgen kann.

Gegenstand der Erfindung ist demzufolge ein Verfahren zur Herstellung von Polyrethanen durch Umsetzung von
a) Polyisocyanaten mit
b) Verbindungen mit mindestens zwei mit Isocyanatgruppen reaktiven Wasserstoffatomen,
dadurch gekennzeichnet, dass die Verbindungen mit mindestens zwei mit Isocyanatgruppen reaktiven Wasserstoffatomen b) Mischungen aus
bi) einem Polyol mit einer Hydroxylzahl im Bereich zwischen 20 und 180 mgKOH/g, hergestellt durch Umsetzung von eines Polybutadienpolyols mit Alkylenoxid unter Verwendung eines DMC-Katalysators, und
bii) einem Polyetheralkohol mit einer Funktionalität von 2 bis 3 und einer Hydroxylzahl im Bereich zwischen 20 und 450 mgKOH/g, der von bi) verschieden ist, enthalten, und/oder als

Polyisocyanate a) ein Isocyanatgruppen und Urethangruppen enthaltendes Umsetzungsprodukt eines mindestens zweifunktionellen Isocyanats mit dem Polyol bi) eingesetzt wird.

Die Herstellung Polyols bi) erfolgt, wie beschreiben, durch Anlagerung von Alkylenoxiden an H-funktionelle Startsubstanzen unter Verwendung von DMC-Katalysatoren.

Als DMC-Katalysatoren können die allgemein bekannten DMC-Katalysatoren eingesetzt werden. Vorzugsweise kommen DMC-Katalysatoren auf Basis von Zinkhexacyanocobaltat zum Einsatz.

Als Alkylenoxide werden vorzugsweise Ethylenoxid und/oder Propylenoxid einzeln oder im Gemisch eingesetzt.

Die Herstellung der Polyetheralkohole erfolgt bei den dafür üblichen Bedingungen. Zu Beginn der Umsetzung wird die Startsubstanz vorgelegt und, soweit notwendig, Wasser und andere leicht flüchtige Verbindungen entfernt. Dies erfolgt zumeist durch Destillation, vorzugsweise unter Vakuum. Dabei kann der Katalysator bereits in der Startsubstanz vorhanden sein, es ist jedoch auch möglich, den Katalysator erst nach der Behandlung der Startsubstanz zuzusetzen. Bei der letztgenannten Variante wird der Katalysator thermisch weniger belastet. Vor der Dosierung der Alkylenoxide ist es üblich, den Reaktor zu inertisieren, um unerwünschte Reaktionen der Alkylenoxide mit Sauerstoff zu vermeiden. Danach erfolgt die Dosierung der Alkylenoxide beziehungsweise einer Mischung aus Alkylenoxiden und der Startsubstanz, wobei die Anlagerung in der oben beschriebenen Weise durchgeführt wird. Die Anlagerung der Alkylenoxide erfolgt zumeist bei Drücken im Bereich von 0,01 bar und 10 bar und Temperaturen im Bereich von 50 bis 200 °C, vorzugsweise 90 bis 150 °C. Es hat sich gezeigt, dass die Geschwindigkeit, mit der die Alkylenoxide dosiert werden, ebenfalls einen Einfluss auf die Reaktivität der entstehenden Polyetheralkohole hat. Je schneller die Alkylenoxide dosiert werden, desto höher ist die Reaktivität der resultierenden Polyetheralkohole. Nach der Anlagerung der Alkylenoxide wird zumeist eine Nachreaktionsphase zur vollständigen Umsetzung der Alkylenoxide angeschlossen. Danach werden nicht umgesetzte Monomeren und leichtflüchtige Verbindungen aus der Reaktionsmischung entfernt, üblicherweise mittels Destillation. Der Katalysator kann üblicherweise im Polyetheralkohol verbleiben, es ist jedoch prinzipiell möglich, ihn ganz oder teilweise zu entfernen, beispielsweise mittels Filtration. Der fertige Polyetheralkohol wird üblicherweise gegen thermooxidativen Abbau stabilisiert, zumeist durch Zusatz von Antioxidantien, wie sterisch gehinderten Aminen oder Phenolen. Der Zusatz kann dabei vor, während oder nach der eigentlich Synthese erfolgen.

In einer weiteren Ausführungsform wird nur ein Teil des Starters im Reaktor vorgelegt und der restliche Teil kontinuierlich zusammen mit den Alkylenoxiden im richtigen Verhältnis zudosiert, wie dies z.B. in EP 879 259 beschrieben ist.

Auch eine kontinuierliche Herstellung des Polyols ist möglich, wie es z.B. in WO 98/03571 beschrieben ist.

Der Polyetheralkohol bii) weist, wie beschrieben, eine Hydroxylzahl im Bereich zwischen 20 und 450 mgKOH/g und eine Funktionalität von 2 bis 3 auf und ist von bi) verschieden. Insbesondere wird als Komponente bii) kein Polybutadienpolyol oder ein Umsetzungsprodukt aus einem Polybutadienpolyol eingesetzt.

Die Polyole bi) und bii) werden vorzugsweise in einem Gewichtsverhältnis von bi) zu bii) von 15 : 1 bis 1 : 5 eingesetzt.

Als Polyetheralkohol bii) können Polyetherdiole eingesetzt werden, die durch Polymerisation von Tetrahydrofuran hergestellt werden. Derartige Verbindungen sind allgemein bekannt und werden beispielsweise von der BASF AG unter der Bezeichnung PolyTHF^{®} vertrieben. Vorzugsweise haben die als Polyol bii) eingesetzten Polytetrahydrofurane eine Hydroxylzahl zwischen 56 und 450 mg KOH/g.

Es können auch Polyetherdiole eingesetzt werden, die durch Anlagerung von Alkylenoxiden an zweifunktionelle Startsubstanzen, insbesondere Diole, hergestellt wurden. Als Diole können Ethylenglykol, Diethylenglykol, Propylenglykol, Dipropylenglykol oder Butandiole eingesetzt werden. Als Alkylenoxide werden üblicherweise Ethylenoxid und/oder Propylenoxid eingesetzt. Die Umsetzung der Startsubstanzen mit den Alkylenoxiden erfolgt üblicherweise unter Einsatz von Katalysatoren. Als Katalysatoren können basische Verbindungen, vorzugsweise Hydroxide von Alkalimetallen, insbesondere Kaliumhydroxid eingesetzt. In einer weiteren Ausführungsform werden als Katalysatoren die oben beschriebenen DMC-Katalysatoren eingesetzt.

Die als Komponente bii) eingesetzten Polyethertriole sind vorzugsweise Umsetzungs-produkte von dreifunktionellen Verbindungen, insbesondere Glyzerin und/oder Trimethylolpropan, mit Alkylenoxiden.

Zu den eingesetzten Alkylenoxiden und zur Herstellung der Polyetherdiole- und/oder triole bii) gilt das oben zu bi) gesagte.

Neben den Polyolen bi) und bii) kann als weitere Verbindung mit mindestens zwei mit Isocyanatgruppen reaktiven Wasserstoffatomen noch mindestens ein weiteres, von bi) und bii) verschiedenes Polyol biii) eingesetzt werden. Vorzugsweise ist das Polyol biii) ein Diol mit einer OH-Zahl 25 bis 1800 mgKOH/g. bei biii) kann es sich um ein Polytetrahydrofuan oder um ein Umsetzungsprodukt von H-funktionellen Startsubstanzen mit Alkylenoxiden handeln. Zu den Eigenschaften und zur Herstellung von biii) gilt das zu bii) gesagte.

Als Katalysatoren zur Herstellung der Polyetheralkohole bii) können die üblichen Alkoxylierungskatalysatoren eingesetzt werden. Dabei handelt es sich einmal um basische Verbindungen, vorzugsweise Oxide und/oder Hydroxide von Alkalimetallen, besonders bevorzugt um Kaliumhydroxid. Bei diesem Verfahren muss der Katalysator nach der Umsetzung abgetrennt werden, üblicherweise durch Neutralisation und Abtrennung der entstandenen Salze. Zum anderen können auch zur Herstellung der Polyetheralkohole bii) DMC-Katalysatoren eingesetzt werden.

Bei der Herstellung des als Isocyanatkomponente einsetzbaren Prepolymers erfolgt der Umsatz des alkoxylierten Polybutadienpolyols (bi) mit einem Überschuss an Polyisocyanat, vorzugsweise Diisocyanat, in hierfür üblichen Reaktoren unter Normaldruckbedingungen. Die Mitverwendung weiterer polyolischer Verbindungen ist hier weitestgehend auf Polyetherdiole vom Typ (biii) beschränkt.

Die Umsetzung der OH-funktionalisierten Verbindungen (bi) und gegebenenfalls (biii) mit überschüssigen Isocyanat kann bei Verwendung der OH-funktionalisierten Verbindungen sowohl in zwei Stufen, das heißt Umsatz von (bi) gefolgt vom Umsatz von (biii), als auch einer Stufe, das heißt Umsatz des Gemisches aus (bi) und (biii), erfolgen.

Die Herstellung der Prepolymere erfolgt im wesentlichen, indem das jeweilige Isocyanat, vorzugsweise Diisocyanat, im Reaktor vorgelegt, das Polybutadienpolyol (bi) oder das oben genannte Gemisch beider OH-funktionalisierter Verbindungen zudosiert und unter Rühren das Reaktionsgemisch erwärmt und so die Prepolymerisationsreaktion gestartet wird. Die Reaktion wird üblicherweise im Temperaturbereich von 60°C bis 100°C, vorzugsweise 70°C bis 90°C vorzugsweise über einen Zeitraum von 30 bis 120 min durchgeführt.

Die Umsetzung kann kontinuierlich oder diskontinuierlich in üblichen Reaktoren, beispielsweise bekannten Rohr- oder Rührkesselreaktoren, bevorzugt in Gegenwart von üblichen Katalysatoren, die die Reaktion der OH-funktionellen Verbindungen mit den Isocyanatgruppen beschleunigen, sowie gegebenenfalls inerten Lösungsmitteln, d.h. gegenüber den Isocyanaten und OH-funktionellen Verbindungen nicht reaktiven Verbindungen, erfolgen.

Durch die Verwendung des Prepolymers auf Basis des Polyols bi), vorzugsweise bei gleichzeitiger Verwendung des Polyols bi) in den Verbindungen mit mindestens zwei mit Isocyanatgruppen reaktiven Wasserstoffatomen b), ist es möglich, sehr hohe Anteile an Polybutadienstrukturen in die kompakten oder geschäumten Polyurethan einzubauen, ohne dass es zu Problemen bei der Herstellung kommt, beispielsweise auf Grund von Mischungsproblemen.

Die Herstellung der Polyurethane erfolgt, wie beschrieben, durch Umsetzung der Isocyanate a) mit Verbindungen mit mindestens zwei mit Isocyanatgruppen reaktiven Wasserstoffatomen b).

Als Polyisocyanate a) können, an Stelle von oder im Gemische mit den oben beschriebenen Prepolymeren, alle üblichen aliphatischen und aromatischen Polyisocyanate eingesetzt werden. Beispiele hierfür sind Hexamethylendiisocyanat (HDI), Isophorondiisocyanat (IPDI), Toluylendiisocyanat (TDI) und Diiphenylmethandiisocyanat (MDI), oder Gemische von MDI mit höherkernigen Kondensationsprodukten des MDI, häufig als Roh-MDI bezeichnet. Vorzugsweise werden MDI und Roh-MDI, besonders bevorzugt MDI und dessen Umsetzungs-produkte mit Polyolen, insbesondere Glykolen im stöchometrischen Unterschuss eingesetzt.

Neben den Mischungen aus bi), bii) und gegebenenfalls biii) können in der Komponente b) noch weitere Verbindungen mit mindestens zwei mit Isocyanatgruppen reaktiven Wasserstoffatomen eingesetzt werden.

Vorzugsweise können solche Verbindungen mit mindestens zwei mit Isocyanatgruppen reaktiven Wasserstoffatomen eingesetzt werden, die mindestens zwei Hydroxyl- und/oder Aminogruppen im Molekül aufweisen. Insbesondere weisen diese Verbindungen ein Molekulargewicht Mn zwischen 60 und 10000 g/mol auf. Besonders bevorzugt werden die Verbindungen mit mindestens zwei mit Isocyanatgruppen reaktiven Wasserstoffatomen ausgewählt aus der Gruppe, enthaltend mehrwertige Alkohole, Polyetheralkohole, Polyesteralkohole, Polyetherpolyamine, hydroxylgruppenhaltige Polycarbonate, hydroxylgruppenhaltige Polyacetale und beliebige Mischungen aus mindestens zwei dieser Verbindungen. Besonders bevorzugt sind mehrwertige Alkohole, Polyetheralkohole und Polyesteralkohole sowie Mischungen daraus.

Beispiele für mehrwertige Alkohole sind Alkandiole mit 2 bis 10, vorzugsweise 2 bis 6 Kohlenstoffatomen sowie höhere Alkohole, wie Glycerin, Trimethylolpropan oder Pentaerythrit. Weiterhin können natürliche Polyole, wie Rizinusöl, eingesetzt werden.

Die Polyetheralkohole weisen vorzugsweise eine Funktionalität im Bereich von 2 bis 8 auf. Ihre Herstellung erfolgt üblicherweise durch Anlagerung von Alkylenoxiden, insbesondere Ethylenoxid und/oder Propylenoxid, an H-funktionelle Startsubstanzen. Die Alkylenoxide können dabei einzeln, nacheinander oder als Mischung eingesetzt werden. Als Startsubstanzen kommen beispielsweise Wasser, Diole, Triole, höherfunktionelle Alkohole, Zuckeralkohole, aliphatische oder aromatische Amine oder Aminoalkohole in Betracht.

Besonders geeignet sind Polyetheralkohole mit einem mittleren Molekulargewicht zwischen 100 und 3000 g/mol und einer mittleren OH-Funktionalität von 2 bis 3. Besonders bevorzugte Startsubstanzen zur Herstellung dieser Polyetheralkohole sind Propylenglykol und Glyzerin. Bevorzugte Alkylenoxide sind Ethylenoxid und Propylenoxid.

Ebenfalls bevorzugt sind Polyesteralkohole mit einem mittleren Molekulargewicht zwischen 400 und 3000 g/mol, einer mittleren OH-Funktionalität von 2. Besonders bevorzugt sind Polyesteralkohole auf Basis von Adipinsäure.

Die Umsetzung der Komponenten a) und b) erfolgt üblicherweise in Anwesenheit von Katalysatoren. Als Katalysatoren, welche insbesondere die Reaktion zwischen den NCO-Gruppen der Diisocyanate und den Hydroxylgruppen der Polyalkohole bei der Herstellung der Prepolymere beschleunigen, können die nach dem Stand der Technik bekannten und üblichen stark basischen Amine sowie organische Metallverbindungen wie Titansäureester, Eisenverbindungen wie z.B. Eisen-(III)-acetylacetonat, Zinnverbindungen, z.B. Zinn-(II)-Salze von organischen Carbonsäuren, oder die Dialkylzinn-(IV)-Salze von organischen Carbonsäuren oder Gemische mit mindestens zwei der genannten Katalysatoren sowie synergistisch wirkende Kombinationen aus stark basischen Aminen und organischen Metallverbindungen eingesetzt werden. Die Katalysatoren können in üblichen Mengen, beispielsweise 0,002 bis 5 Gew.-%, bezogen auf die Polyalkohole, verwendet werden.

Je nachdem, ob geschäumte oder kompakte Polyurethane hergestellt werden sollen, erfolgt die Umsetzung in Anwesenheit oder in Abwesenheit von Treibmitteln.

Als Treibmittel kann Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan, n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Besonders bevorzugt eingesezt werden Cyclopentan und/oder n-Pentan. Die genannten physikalischen Treibmittel können allein oder in beliebigen Kombinationen untereinander eingesetzt werden.

Die nach dem erfindungsgemäßen Verfahren hergestellten Polyurethane sind hydrophob und weisen gummielastische bzw. gummiartige Eigenschaften, sowie einen Gummitouch, eine Griffeigenschaft, auf.

Bei den nach dem erfindungsgemäßen Verfahren hergestellten Polyurethanen handelt es sich vorzugsweise um elastische kompakthärtende Zweikomponenten-Gießharze und um elastische schäumende Zweikomponentensysteme, insbesondere Polyrethanweich- bis halbhartschäume.

Die Erfindung soll an den nachfolgenden Beispielen näher beschrieben werden.

### Ausführungsbeispiel 1 - (Herstellung des Polyetherpolyols bi))

In einem 1,5L-Rührautoklaven wurden 495 g OH-funktionalisiertes Polybudatien (Typ Poly-BD R-20 LM, OHZ 105 mg KOH/g) zusammen mit 6,1 g einer 4,9%igen Suspension von DMC-Katalysator, hergestellt gemäß EP 0 862 947, in Polypropylenglykol der Molmasse 1000 g/mol vorgelegt und bei 100 °C durch Anlegen von Vakuum und leichtem N₂-Strom entwässert. Nach Inertisierung des Reaktors mit 1 bar N₂ wurden 505 g Propylenoxid unter gutem Rühren bei einer Temperatur von 120 °C in den Reaktor dosiert, wobei ein Druck von 5 bar nicht überschritten wurde. Nach Ende der Dosierung ließ man bis zur Druckkonstanz ausreagieren. Anschließend wurde der Reaktorinhalt durch Destillation von Resten nicht umgesetzten Alkylenoxids und sonstigen flüchtigen Bestandteilen befreit und das erhaltene Polyetherpolyol ausgefüllt.

Eigenschaften des erhaltenen Polyols:

| | |
|---|---|
| OH-Zahl | 4,5 mgKOH/g |
| Viskosität bei 25 °C | 1636 mPas |
| Säurezahl | ,016 mgKOH/g |
| H₂O-Gehalt | 0,008 % |

### Ausführungsbeispiel 2 -2-Komponenten-Polyurethan-Weichschaum

### 2.1 Herstellung der Polyolkomponente

514g des Polyetherpolyols nach Ausführungsbeispiel 1 wurden mit 250g eines Polyetherpolyols auf Basis Glyzerin/Propylenoxyd/Ethylenoxyd mit einem Molekulargewicht 4360 und einer Funktionalität von 2,72, 150g eines 45%Styrol/Acrylnitril-Polymeres enthaltenden Polyetherpolyols auf Basis von Glyzerin, Propylenoxyd und Ethylenoxyd mit einem Molekulargewicht 4360 (Funktionalität 2,72), 35g eines Polyetherpolyols auf Basis von Glyzerin, Propylenoxyd und Ethylenoxyd mit einem Molekulargewicht von 3550 und einer Funktionalität von 2,66, 10g Diethanolamin, 6g eines organomodifizierten Siloxanpolyether-Schaum-Stabilisators (Handelsname: TEGOSTAB^{®} B-8715LF), 5,7g eines blockierten Triethylendiamin-Katalysators (Handelsname: DABCO^{®} 8154), 2,3g 3-(Dimethylamino)propylamin, 2g N,N-Dimethyl-aminoethylmorpholin sowie 25g Wasser zu einer Polyolkomponente vermischt.

### 2.2 Herstellung der Isocyanatkomponente

750g eines Isocyanatgemisches aus ca. 50% 2,4'-Diphenylmethandiisocyanat und 50% 4,4'-Diphenylmethandiisocyanat (Handelsname: Lupranat^{®} MI) wurden mit 50g reinem 4,4'-Diphenylmethandiisocyanat (Handelsname: Lupranat^{®} ME) sowie 200g Polyphenylenpolymethylen-polyisocyanat (Handelsname: Lupranat^{®} M20W) zu einer Isocyanatkomponente vermischt.

### 2.3 Herstellung des Schaumes und dessen Eigenschaften (freigeschäumt)

Becherversuch: 50g der Polyolkomponente nach Ausführungsbeispiel 2.1 wurden mit 22,5g der Isocyanatkomponente nach Ausführungsbeispiel 2.2 in einem Becher gemischt. Freigeschäumt ergaben sich folgende Daten des entstehenden PUR-Weichschaums.

| Schaum-Eigenschaft | PUR-Weichschaum nach Ausführungsbeispiel 2 |
|---|---|
| Startzeit | 20 sec |
| Steigzeit | 120 sec |
| Abbindezeit | 120 sec |
| Zugfestigkeit | 136 kPa |
| Bruchdehnung | 90% |

### Ausführungsbeispiel 3 - 2-Komponenten-Polyurethan-Gießharz - weichelastisch

### 3.1 Herstellung der Polyolkomponente

470g des Polyetherpolyols nach Ausführungsbeispiel 1 wurden mit 470g eines Polytetrahydrofurans it der OH-Zahl 56mgKOH/g (Handelsname: PolyTHF^{®}2000), 40g eines Natriumalumosilikats mit Zeolithstruktur 50%ig in Rizinusöl, 15g Butandiol 1,4, 3g Triethylendiamin 33%ig in Dipropylenglykol und 2g eines Silikonentschäumers (Handelsname: Antifoam MSA) zu einer Polyolkomponente vermischt.

### 3.2 Herstellung der Isocyanatkomponente

870g 4,4'-Dipenylmethandisocyanat (Handelsname: Lupranat® ME) wurden in einem Laborreaktor vorgelegt. Durch Zusatz eines Glykolgemisches aus 49g eines Propylenglykols mit einer OH-Zahl von 248 mgKOH/g und 82g Dipropylenglykol unter rühren wurde die Umsetzung zum Prepolymer durchgeführt. Der Umsatz erfolgte bei ca. 80°C innerhalb von ca. 60 min zum gewünschten Prepolymer. Man erhielt ein Produkt mit 23 Gew.-%NCO.

### 3.3 Herstellung des PUR-Gießharzes und dessen Eigenschaften

300g der Polyolkomponente nach Ausführungsbeispiel 3.1 wurden mit 75g der Isocyanatkomponente nach Ausführungsbeispiel 3.2 in einem Becher gemischt und das flüssige Reaktionsgemisch in eine mit Trennmittel versehene Prüfform gegossen. Nach Aushärtung wurden die mechanischen Eigenschaften gemessen. Man erhielt einen kompakten gummielastischen Formstoff mit Gummitouch und folgenden Eigenschaften

| Eigenschaft | PUR-Gießharz nach Ausführungsbeispiel 3 |
|---|---|
| Härte | 46°Shore A |
| Zugfestigkeit | 4 Mpas |
| Bruchdehnung | 439 % |
| Weiterreißfestigkeit | 6,2 N/mm |

### Ausführungsbeispiel 4 - 2-Komponenten-Polyurethan-Gießharz - hartelastisch

### 4.1 Herstellung der Polyolkomponente

600g des Polyetherpolyols nach Ausführungsbeispiel 1 wurden mit 300g eines Polytetrahydrofurans mit einer OH-Zahl 112mgKOH/g PolyTHF^{®}1000 der BASF AG), 40g eines Natriumalumosilikats mit Zeolithstruktur 50%ig in Rizinusöl, 55g Butandiol 1,4, 3g Triethylendiamin 33%ig in Dipropylenglykol und 2g eines Silikonentschäumers (Handelsname: Antifoam MSA) zu einer Polyolkomponente vermischt.

### 4.2 Herstellung der Isocyanatkomponente

870g 4,4'-Dipenylmethandisocyanat (Handelsname: Lupranat^{®} ME) wurden in einem Laborreaktor vorgelegt. Durch Zusatz eines Glykolgemisches aus 49g eines Propylenglykols mit einer OH-Zahl von 248 mgKOH/g und 82g Dipropylenglykol unter rühren wurde die Umsetzung zum Prepolymer durchgeführt. Der Umsatz erfolgte bei ca. 80°C innerhalb von ca. 60 min zum gewünschten Prepolymer. Man erhielt ein Produkt mit 23%NCO.

### 4.3 Herstellung des PUR-Gießharzes und dessen Eigenschaften

300g der Polyolkomponente nach Ausführungsbeispiel 4.1 wurden mit 75g der Isocyanatkomponente nach Ausführungsbeispiel 4.2 in einem Becher gemischt und das flüssige Reaktionsgemisch in eine mit Trennmittel versehene Prüfform gegossen. Nach Aushärtung wurden die mechanischen Eigenschaften gemessen. Man erhielt einen kompakten gummielastischen Formstoff mit Gummitouch und folgenden Eigenschaften

| Eigenschaft | PUR-Gießharz nach Ausführungsbeispiel 4 |
|---|---|
| Härte | 80°Shore A |
| Zugfestigkeit | 18,2 MPas |
| Bruchdehnung | 375 % |
| Weiterreißfestigkeit | 22,3 N/mm |

### Ausführungsbeispiel 5 - (weichelastisches 2-Komponenten-Polyurethan-Gießharz)

### 5.1 Herstellung der Polyolkomponente

674g des Polyetherpolyols nach Ausführungsbeispiel 1 wurden mit 217g eines Polyetherpolyols auf Basis Glyzerin/Propylenoxyd mit der OH-Zahl 42mgKOH/g, 40g eines Natriumalumosilikats mit Zeolithstruktur 50%ig in Rizinusöl, 66g Butandiol 1,4, und 3g Triethylendiamin 33%ig in Dipropylenglykol zu einer Polyolkomponente vermischt.

### 5.2 Herstellung der Isocyanatkomponente

700g 4,4'-Dipenylmethandisocyanat (Handelsname: Lupranat ME) wurden in einem Laborreaktor zusammen mit 60g carbodiimidmodifizierten 4,4'-Dipenylmethandisocyanat (Handelsname: Lupranat® MM103) vorgelegt. Durch Zusatz eines Glykolgemisches aus 200g des Polyetherpolyols nach Ausführungsbeispiel 1 und 40g Dipropylenglykol unter rühren wurde die Umsetzung zum Prepolymer durchgeführt. Der Umsatz erfolgte bei ca. 80°C innerhalb von ca. 60 min zum gewünschten Prepolymer. Man erhielt ein Produkt mit 22%NCO.

### 5.3 Herstellung des PUR-Gießharzes und dessen Eigenschaften

300g der Polyolkomponente nach Ausführungsbeispiel 5.1 wurden mit 144g der Isocyanatkomponente nach Ausführungsbeispiel 5.2 in einem Becher gemischt und das flüssige Reaktionsgemisch in eine mit Trennmittel versehene Prüfform gegossen.Nach Aushärtung wurden die mechanischen Eigenschaften gemessen. Man erhielt einen kompakten gummielastischen Formstoff mit Gummitouch und folgenden Eigenschaften

| Eigenschaft | PUR-Gießharz nach Ausführungsbeispiel 5 |
|---|---|
| Härte | 57°Shore A |
| Zugfestigkeit | 6,1 MPas |
| Bruchdehnung | 207 % |
| Weiterreißfestigkeit | 6,7 N/mm |

## Patentansprüche

1. Verfahren zur Herstellung von Polyurethanen durch Umsetzung von
a) Polyisocyanaten mit
b) Verbindungen mit mindestens zwei mit Isocyanatgruppen reaktiven Wasserstoffatomen,
**dadurch gekennzeichnet, dass** die Verbindungen mit mindestens zwei mit Isocyanatgruppen reaktiven Wasserstoffatomen b) Mischungen aus
bi) einem Polyol mit einer Hydroxylzahl im Bereich zwischen 20 und 180 mgKOH/g, hergestellt durch Umsetzung von eines Polybutadienpolyols mit Alkylenoxid unter Verwendung eines DMC-Katalysators, und
bii) einem Polyetheralkohol mit einer Funktionalität von 2 bis 3 und einer Hydroxylzahl im Bereich zwischen 20 und 450 mgKOH/g, der von bi) verschieden ist, enthalten, und/oder als Polyisocyanate a) ein Isocyanatgruppen und Urethangruppen enthaltendes Umsetzungsprodukt eines mindestens zweifunktionellen Isocyanats mit dem Polyol bi) eingesetzt wird.

2. Verfahren nach Anspruch1, **dadurch gekennzeichnet, dass** die Komponente bii) ein Polytetrahydrofuran mit einer Hydroxylzahl zwischen 56 und 450 mg KOH/g enthält.

3. Verfahren nach Anspruch1, **dadurch gekennzeichnet, dass** die Komponente bii) ein Umsetzungsprodukt von Glyzerin und/oder Trimethylolpropan mit Alkylenoxiden mit einer OH-Zahl zwischen 20 und 400 mgKOH/g enthält.

4. Verfahren nach Anspruch 1, **dadurch gekennzeichnet, dass** die Komponente b) ein weiteres Polyol biii) enthält.

5. Verfahren nach Anspruch1, **dadurch gekennzeichnet, dass** das Polyol biii) ein von bi) und bii) verschiedenes Diol mit einer OH-Zahl 25 bis 1800 mgKOH/g ist.

6. Verfahren nach Anspruch 1, **dadurch gekennzeichnet, dass** die Polyole bi) und bii) in einem Gewichtsverhältnis von 15 : 1 bis 1: 5 eingesetzt werden.

7. Verfahren nach einen der Ansprüche 1 bis 5, **dadurch gekennzeichnet, dass** durch die Umsetzung ein kompakter Formstoff hergestellt wird.

8. Verfahren einen der Ansprüche 1 bis 5, **dadurch gekennzeichnet, dass** durch die Umsetzung ein geschäumter Formstoff hergestellt wird.
